# EUROPEAN PATENT APPLICATION

(11) **EP 4 819 114 A1**
(43) Date of publication of application: **07.10.2026**
(21) Application number: 25225975.9
(22) Date of filing: 19.12.2025
(51) Int. Cl.: G09F 9/33, G09F 19/22, G09F 27/00

(54) **MULTI-LAYERED ELECTRICAL DISPLAY ASSEMBLIES**

(30) Priority: 03.04.2025 US 202563783006 P; 30.10.2025 US 202519374553
(71) Applicant: The Boeing Company, Arlington, VA 22202 (US)
(72) Inventor: HETTICK, Lawrence Dean, 22202 Arlington (US); WIGHTMAN, Jonathan Robert Schmidt, 22202 Arlington (US); GREENE, Edward Ryan, 22202 Arlington (US); GARCIA, EMMANUEL ABERGAS, 22202 Arlington (US)
(74) Representative: St Clair Jones, Gregory Arthur Langley

(57) **Abstract**

A multi-layered electrical display assembly and method includes a display having a mounting side and a viewing side. The mounting side is coupled with a mounting surface and the viewing side displays a first image with one or more display elements. A panel assembly includes a substrate having a first side and a second side. The panel assembly includes one or more conductive traces and plural electrical components disposed on the first side of the substrate. The plural electrical components are controlled to display a second image. The second side of the substrate is coupled with the viewing side of the display to cover a portion of the viewing side of the display.

## Description

### CROSS-REFERENCE TO RELATED APPLICATIONS

This application claims priority to U.S. Provisional Application No. 63/783,006 (filed 22-April-2025), the entire contents of which are incorporated herein by reference.

### FIELD OF THE DISCLOSURE

Examples of the present disclosure generally relate to multi-layered electrical display assemblies for dynamically displaying information with the layered display assemblies.

### BACKGROUND OF THE DISCLOSURE

Interior surfaces of an aircraft typically include panels with decorative laminate top layers that contain branding colors or other branding elements that may be customer specific. Other branding elements may be installed within the aircraft as display panels, decals, hardware, or other physical structures. As another example, branding elements may be displayed via an electric display, which traditionally may include strip lighting. Displays utilizing strip lighting, however, often require panels having significant weights and thicknesses, are limited by minimum lengths of the lighting strips, the lighting elements of each strip may only emit light of a single color, etc.

When an aircraft is sold, however, the process of updating the branding information can be difficult. For example, the buyer may wish to remove the panels and other physical structures displaying branding colors or elements associated with the seller and replace the panels with branding elements of their own. As can be appreciated, this can be difficult, costly, time consuming, can generate waste, and may be hazardous due to chemicals that may be required to remove laminate top layers from panels.

### SUMMARY OF THE DISCLOSURE

A need exists for a multi-layered display assembly that may be more easily and readily customizable and that may dynamically change images being displayed. Moreover, a need exists for a lighting display assembly that includes plural lighting elements that may be independently controlled to change an image that may be displayed by the display assembly.

With those needs in mind, in one example, a layered display assembly is provided. The layered display assembly includes a display having a mounting side and a viewing side. The mounting side is coupled with a mounting surface and the viewing side displays a first image with one or more display elements. A panel assembly includes a substrate having a first side and a second side. The panel assembly includes one or more conductive traces and plural electrical components disposed on the first side of the substrate. The plural electrical components are controlled to display a second image. The second side of the substrate is coupled with the viewing side of the display to cover a portion of the viewing side of the display.

In another example, a layered electrical display assembly is provided. The layered electrical display assembly includes a display having a mounting side coupled with a mounting surface and a viewing side configured to display a first image with one or more display elements. The layered assembly includes a panel assembly including a substrate having a first side and a second side. The second side of the substrate is operably coupled with a portion of the viewing side of the display. One or more conductive traces are disposed on the first side of the substrate. Plural electrical components are coupled with the first side of the substrate and electrically coupled with the one or more conductive traces. A decorative layer is operably coupled with a portion of the first side of the substrate. The one or more conductive traces and the electrical components are disposed between the first side of the substrate and the decorative layer. The electrical components include plural lighting elements that emit light to display a second image on the first side of the substrate.

In another example, a multi-layered electrical display assembly is provided. The multi-layered display assembly includes a display and a panel assembly. The display includes a mounting side that is coupled with a mounting surface and a viewing side that displays a first image with one or more display elements. The panel assembly includes a substrate with a first side and a second side. The second side of the substrate is coupled with a portion of the viewing side of the display. One or more conductive traces are disposed on the first side of the substrate. Plural lighting elements are electrically coupled with the conductive traces and emit light to display a second image on the first side of the substrate. One or more control devices are electrically coupled with the lighting elements and control a setting of each of the lighting elements to change a characteristic of the emitted light to change a portion of the second image. One or more sensing devices are coupled with the control devices. The sensing devices sense one or more interactions of a user and the control devices change a setting of one or more of the lighting elements to change a portion of the second image based on the one or more interactions sensed by the sensing devices. The panel assembly also includes a decorative layer operably coupled with a portion of the first side of the substrate. The decorative layer covers at least a portion of the substrate and one or more of the lighting elements within the portion of the substrate that is covered by the decorative layer.

### BRIEF DESCRIPTION OF THE DRAWINGS

Figure 1 illustrates a perspective front view of an aircraft, according to an example of the present disclosure.
Figure 2 illustrates a perspective internal view of a portion of an internal cabin of an aircraft, according to an example of the present disclosure.
Figure 3 illustrates a perspective internal view of a portion of the internal cabin of the aircraft, according to an example of the present disclosure.
Figure 4A illustrates a layered display assembly, according to an example of the present disclosure.
Figure 4B illustrates a cross-sectional exploded view of the layered display assembly illustrated in Figure 4A, according to an example of the present disclosure.
Figure 5A illustrates a layered display assembly, according to an example of the present disclosure.
Figure 5B illustrates a cross-sectional exploded view of the layered display assembly illustrated in Figure 5A, according to an example of the present disclosure.
Figure 6 illustrates a cross-sectional exploded view of a panel assembly of a layered display assembly, according to an example of the present disclosure.
Figure 7A illustrates a layered display assembly, according to an example of the present disclosure.
Figure 7B illustrates a cross-sectional exploded view of the layered display assembly illustrated in Figure 7A, according to an example of the present disclosure.
Figure 8A illustrates a layered display assembly, according to an example of the present disclosure.
Figure 8B illustrates a cross-sectional exploded view of the layered display assembly illustrated in Figure 8A, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide multi-layered dynamic display assemblies and methods for arranging the layered display assemblies. The display assemblies may include lighting elements that may emit light in a coordinated manner to display plural different images by the different layers of the assembly. The layered display assemblies may include one or more displays that may display a first image, and a panel assembly that may be positioned next to or positioned to cover a portion of the display and may display a second image. The panel assembly includes plural lighting elements that may be independently coupled with one or more conductive traces. The lighting elements may be independently controlled to emit light to display the second image. In one or more examples, the first and second images may include one or more similar characteristics (e.g., colors, shapes, text, etc.). As another example, the first and second images may be arranged such that the images may visually appear to be connected as one single, common image.

The panel assembly may include one or more control devices that may be operably coupled with the lighting elements. The control devices may control one or more settings of the lighting elements to change the characteristics of the second image. In at least one example, the panel assembly includes one or more sensing devices that may sense interactions by an object (e.g., a person, an animal, etc.) and may change a characteristic of the second image that is displayed by the panel assembly. For example, the control devices may change a characteristic of the second image based on the data sensed by the sensing devices.

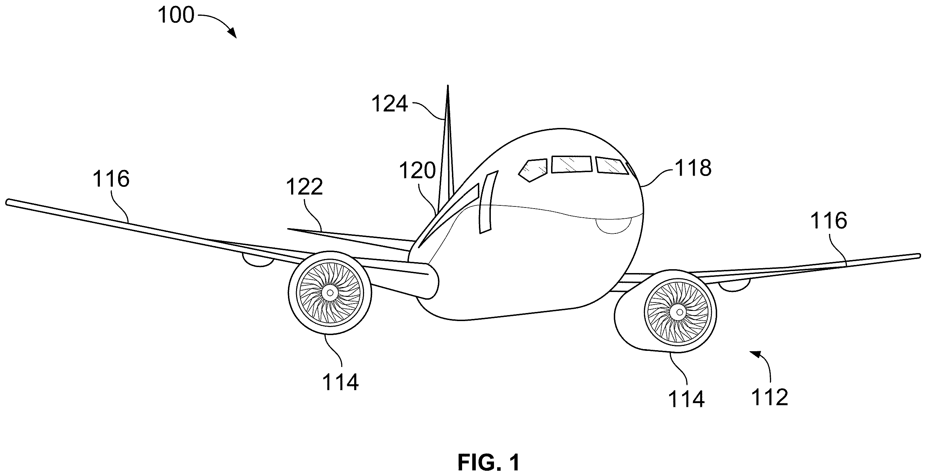

Figure 1 illustrates a perspective front view of an aircraft 100, according to an example of the present disclosure. The aircraft 100 includes a propulsion system 112 that may include two turbofan engines 114, for example. Optionally, the propulsion system 112 may include more engines 114 than shown. The engines 114 are carried by wings 116 of the aircraft 100. In other examples, the engines 114 may be carried by a fuselage 118 and/or an empennage 120. The empennage 120 may also support horizontal stabilizers 122 and a vertical stabilizer 124.

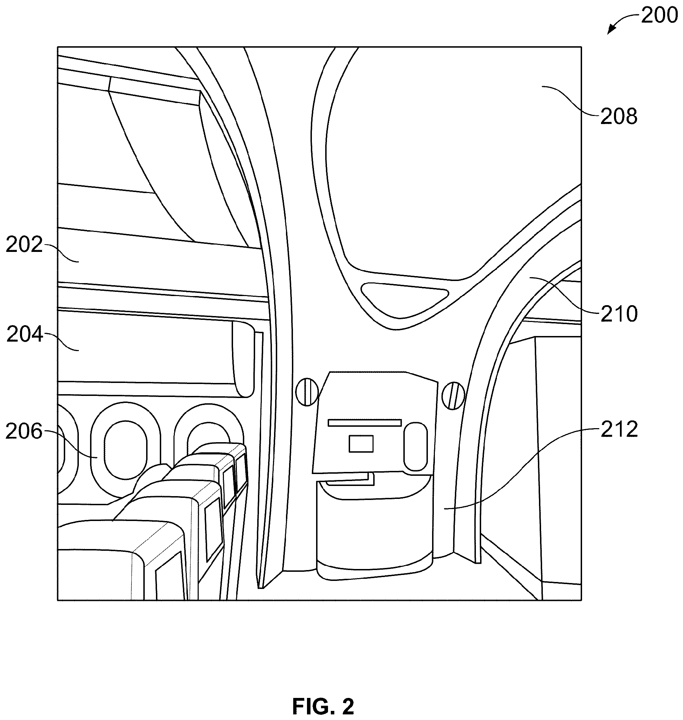

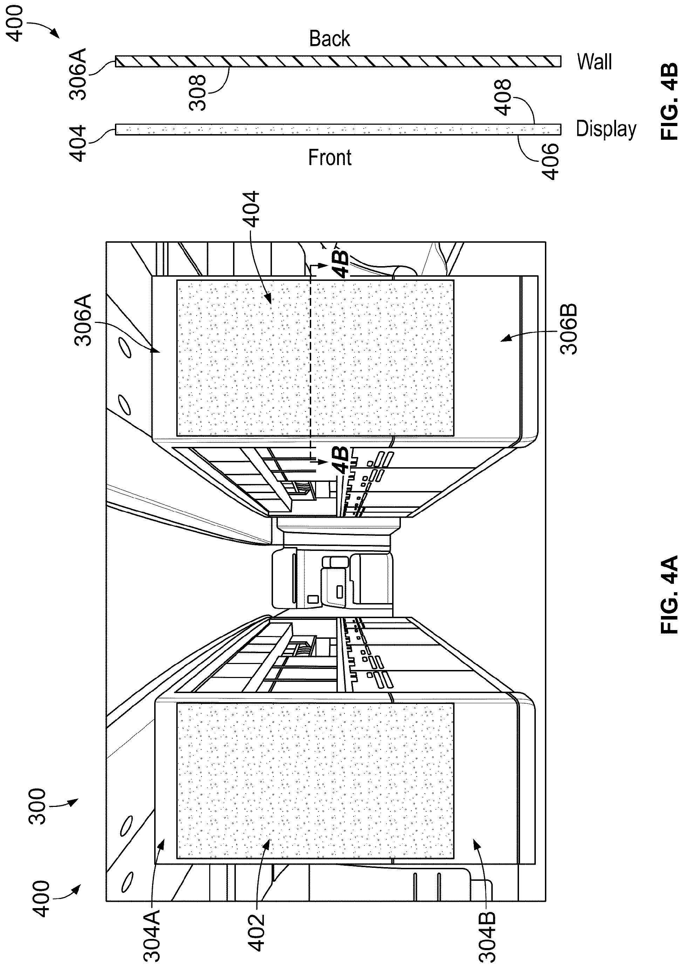

The fuselage 118 of the aircraft 100 defines an internal cabin, which may be defined by interior sidewall panels that connect to a ceiling and a floor. The internal cabin may include a cockpit, one or more work sections (for example, galleys, personnel carry-on baggage areas, and the like), one or more passenger sections (for example, first class, business class, and coach sections), and an aft section. Portions of the aircraft 100, such as panels within the internal cabin, can be coupled with and/or include layered electrical display assemblies, including one or more displays, decorative layers, sensors or sensing devices, controllers or the like, as described herein. For example, Figure 2 illustrates a perspective internal view of a portion of an internal cabin 200 of a vehicle, (such as the aircraft 100 shown in Figure 1) according to an example of the present disclosure. The internal cabin 200 includes numerous surfaces that may be coupled with and/or receive a layered display assembly, such as the layered assemblies described with respect to Figures 4A and 4B, 5A and 5B, 7A and 7B, and 8A and 8B. For example, one or more layered display assemblies may be coupled with sidewall panels 206, ceiling panels 202, stowage bin assemblies 204, ceiling covers 208, doorway arch panels 210, doorway side panels 212, partitions, closets, lavatory walls, light valences, and/or the like, as described herein.

Optionally, instead of an aircraft, examples of the present disclosure may be used with various other vehicles, such as automobiles, buses, locomotives and train cars, watercraft, spacecraft, and the like. As another example, methods and systems as described herein can be used to couple electrical display assemblies having one or more lighting elements within buildings, articles of manufacture, or the like.

The aircraft may include one or more layered display assemblies that are disposed within one or more portions of the internal cabin of the aircraft. The layered display assemblies may include a display, decorative elements coupled with the display, a panel assembly, a decorative layer included with the panel assembly, lighting elements, control devices, sensor(s), or the like, that may display one or more images thereon. For example, the display assemblies may be controlled (e.g., by the one or more control devices) to change a characteristic of a portion of the images displayed, may be controlled to change the image(s) being displayed by the display and/or the panel assembly, may be customizable such that the display and/or the panel assemblies may include decorate layers and/or decorative elements (e.g., laminates, tapes, etc.) coupled to the displays to block, or partially block a portion of the images being displayed, such as to create a new, custom image. For example, the layered display assemblies described herein may provide multi-layered decorative lighting and dynamic display panels that allow for customizable features to be displayed within the internal cabin of the aircraft, within a building or other structure, or the like. The lighting features can be controlled and/or adjusted to change a color of the display, a color of a portion of the display, to change the content being displayed, or the like.

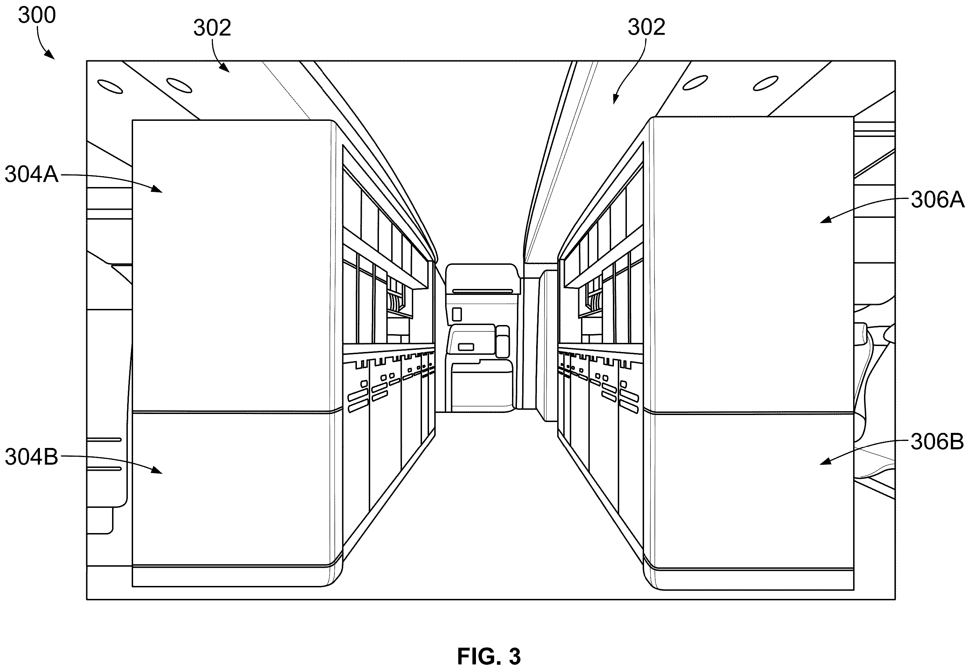

Figure 3 illustrates a perspective internal view of a portion of an internal cabin 300 of the aircraft 100, according to an example of the present disclosure. The illustrated examine of the internal cabin 300 includes plural side panels 304A-B, 306A-B positioned proximate to a galley of the aircraft 100. The side panels are arranged within the internal cabin as sets of side panels arranged as two or more panels that are used to define the side walls of the galley, but in alternative examples may have an alternative arrangement, may be tiled in an alternative manner or fashion, may be single panel structures, or the like.

Figure 4A illustrates a layered display assembly 400 disposed within the internal cabin 300 and Figure 4B illustrates a cross-sectional exploded view of the layered display assembly 400, according to an example of the present disclosure. The layered display assembly 400 includes a first display 402 that is operably coupled with the side panels 304A-B, and a second display 404 that is operably coupled with the side panels 306A, 306B. The first and second displays 402, 404 include a mounting side 408 that is operably coupled with the respective side panel 304A-B, 306A-B, and a viewing side 406 that is opposite the mounting side 408. The displays may be coupled with the respective side panels via mechanical fasteners, adhesives, magnetic devices, or the like.

In one or more examples, the displays 402, 404 may be electrically coupled with a power source (not shown) of the aircraft 100. Optionally, one or more of the displays 402, 404 may be electrically coupled with and/or powered by an alternative power source (e.g., a battery or other energy storage device). In one or more examples, the displays 402, 404 may include and/or be operably coupled with one or more control devices (not shown) that may control a setting of the displays 402, 404.

In one or more examples, the displays 402, 404 may represent and/or contain an emissive screen (e.g., an organic light-emitting diode (OLED), a micro-LED, an LED, or the like). For example, the first and second displays 402, 404 may include one or more lighting elements (not shown) that may emit light to display an image that is viewable from the viewing side 406 of the display. In one example, the image displayed by the first display 402 may be the same as or may differ from an image that is displayed by the second display 404. As another example, the image displayed by the first and second displays 402, 404 may extend between the two displays, such that one portion of the image is displayed by the first display 402, and another portion of the image is displayed by the second display 404. For example, the image may be spliced apart and separated between the first and second displays 402, 404.

The image(s) displayed by the first and/or second displays 402, 404 may be a dynamic image, such that at least a portion of the image is configured to change, such as based on a predetermined timed setting, based on detection of one or more interactions, such as by a user or operator within the internal cabin 300, or the like. For example, the display(s) 402, 404 may include one or more interactive elements, such as one or more controllers and/or sensors that may represent thermal sensors, motion sensors, proximity sensors, or the like. The sensors may sense of detect movement, touch, or another interactive engagement with the operator and may change one or more characteristics and/or settings of the displayed image.

In one or more examples, the displays 402, 404 may represent and/or contain a reflective screen, such an electronic-paper layer. As one example, the reflective screen may enable changes to color of a decorative laminate. For example, the reflective screen may allow for dynamic colored laminate layers that can be cut to make intricate decorative shapes, logos, or other branding elements. In one or more examples, the color of the laminate layers may be controlled and/or changed by a control device emitting an electrical charge to the reflective screen. The color may be set or remain unchanged (or substantially unchanged) until the control device sends a new charge to the reflective screen.

As another example, the reflective screen may display static content, such as logos, branding elements, or the like. The static content may be changed responsive to a software update to the control device, such that the update may provide alternative static content to be displayed. As another example, the static content may be programmed to change by the control device(s) such as to be synced with some of the dynamic changes made by the emissive screen, or the like.

In one or more examples, the layered display assembly may include a single display, such as illustrated in Figure 4B. In alternative examples, the layered display assembly may include two or more different displays that may be layered together and coupled with the mounting surface (e.g., the side wall panel). The two or more different displays may include and/or represent one or more emissive screens and/or one or more reflective screens. The emissive and/or reflective screens may be arranged in a layered assembly such as a portion of each of the layers is viewable to an operator within the internal cabin, such that other portions of the layers overlap with each other, or any combination therein.

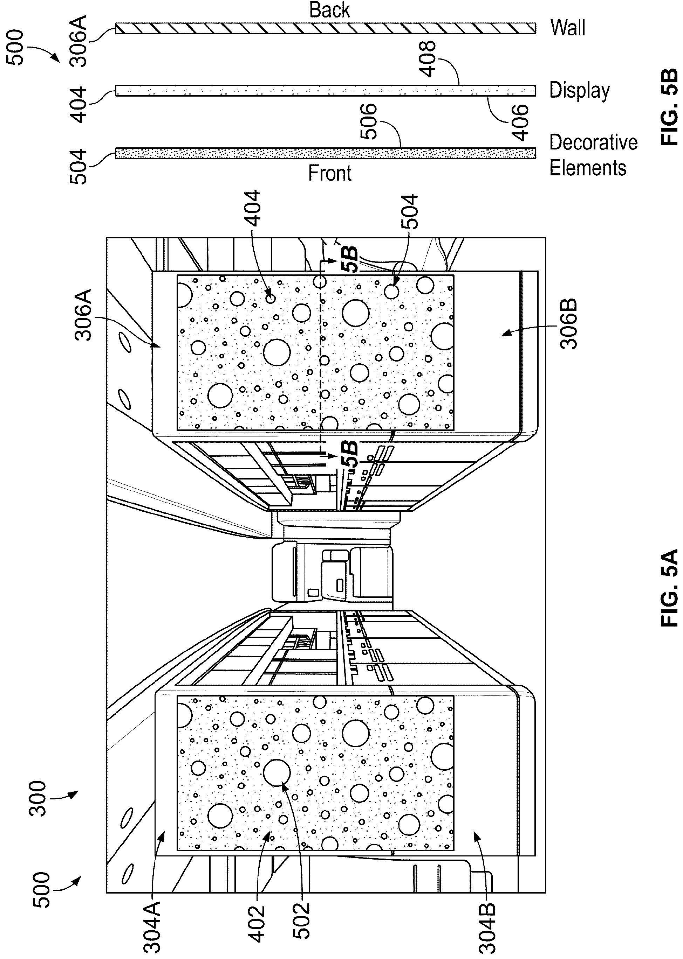

For example, Figure 5A illustrates a layered display assembly 500 disposed within internal cabin 300 and Figure 5B illustrates a cross-sectional exploded view of the layered display assembly 500, according to an example of the present disclosure. Like the layered display assembly 400 illustrated in Figures 4A and 4B, the layered display assembly 500 illustrated in Figure 5A includes the first display 402 operably coupled with the side panels 304A, 304B and the second display 404 operably coupled with the side panels 306A, 306B. The first and second displays 402, 404 may include or represent emissive screens (e.g., OLEDs, micro-LEDs, LEDs, or the like) and/or reflective screens (e.g., electronic paper, or the like).

The layered display assembly 500 also includes a layer of plural decorative elements 504 operably coupled with the viewing side 406 of the displays 402, 404. In one example, the decorative elements may be decorative laminates, films, adhesives, tapes, or the like, that may be coupled with the viewing sides of the displays 402, 404. In the illustrated example, the layer of the decorative elements 504 include plural dots having plural different sizes that are in a patterned arrangement, but in alternative examples, the decorative elements 504 may have any alternative shape, size, arrangement, may include text, numbers, images of defined structures, business logos, branding elements, or any combination therein. The decorative elements 504 may block light that is emitted by lighting elements of the displays 402, 404 that are positioned behind the decorative elements 504 (e.g., may be opaque), or may allow some light emitted by lighting elements behind the decorative elements 504 to pass through (e.g., may be transparent and/or at least partially transparent).

The decorative elements 504 may be coupled to the viewing sides 406 of the displays 402, 404, via an adhesive material, a magnetic device, a fastener device, or the like. In the illustrated example, the decorative elements 504 coupled with the first screen are substantially the same (e.g., have the same shape, size, arrangement, color, etc.) as the decorative elements 504 coupled with the second screen 404. In another example, the decorative elements 504 coupled with the first display 402 may differ from the decorative elements 504 coupled with the second display 404 (e.g., differ in shape, size, arrangement, color, etc.), the first or second displays 402, 404 may be devoid decorative elements 504, the decorative elements 504 of the first display 402 may cover a portion of the first display 402 that is less than a portion of the second display 404 that is covered by the decorative elements 504, or any combination therein. The shape, size, arrangement, color, etc., or the decorative elements 504 illustrated in Figure 5A is for illustrative purposes only, and may have any alternative shape, size, arrangement, features, colors, etc., in an alternative embodiment.

In one or more examples, the layered display assembly may include a panel assembly that may be coupled with the one or more displays 402, 404. In one example, portions of the panel assembly may be positioned to cover one or more portions of the displays 402, 404. In another example, the panel assembly may be positioned next to or proximate to the displays such as a side edge of the panel assembly may be engaged with or facing towards a side edge of one of the displays.

The panel assembly may include one or more electrical components (e.g., lighting elements, control devices, sensors, etc.) that may control the display of a second image that is displayed by the lighting elements of the panel assembly. The second image displayed by the panel assemblies may be different than the first image(s) displayed by the one or more displays 402, 404, may be coordinated with the first image(s) (e.g., have similar features, colors, textual information, or the like). As one example, the first and second images may be controlled to display some information across the displays and the panel assemblies that may appear to be the same image. For example, a portion of the first image may bleed into, may be aligned with, may be shaped and sized, etc., to viewably mesh with a portion of the second image.

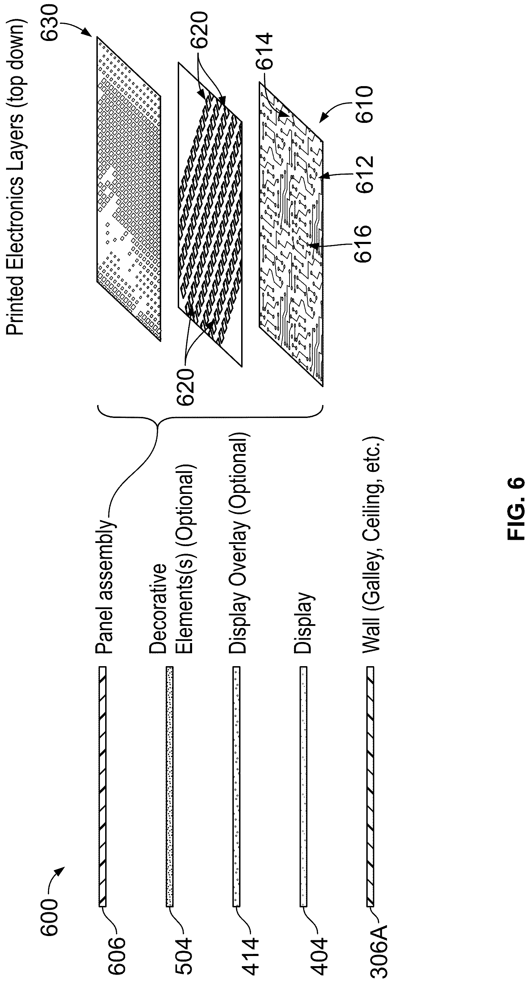

Figure 6 illustrates a cross-sectional exploded view of a panel assembly 606 of a layered display assembly 600, according to an example of the present disclosure. The layered display assembly 600 includes the side panel 306A, which can represent a surface within an interior cabin of the aircraft, can represent a surface of a building or structure (e.g., a business, a train station, a bus station, an airport, etc.), can represent an independent free-standing surface (e.g., a bus stop, a train stop, etc.), or the like. The display 404 may be operably coupled with a mounting surface of the side panel 306A. In one or more examples, the layered display assembly 600 may include one or more additional display overlays 414 that may be operably coupled with the viewing side of the display 404. For example, the display 404 may represent an emissive screen (e.g., an OLED, a micro-LED, or a LED display screen) that may display static and dynamic content, and one or more reflective screens (e.g., electrical paper) that may be a color-changing decorative laminate, may display static content that may be changed with a software changes, or the like.

The layered display assembly 600 may include one or more decorative elements 504 that can represent decorative laminates, films, adhesives, tapes, or the like, that may cover a portion of the display 404. Optionally, the layered display assembly 600 may be devoid or may not include the decorative elements 504.

The layered display assembly 600 includes the panel assembly 606. In one example, the panel assembly 606 may be operably coupled with a first portion of the display 404, and the decorative elements 504 may be coupled with a different, second portion of the display 404. The panel assembly 606 includes a substrate 610 having a first side 614 and a second side 612. One or more conductive traces 616 may be printed onto, applied to, disposed thereon, or the like, the first side 614 of the substrate 610.

The panel assembly 606 includes plural electrical components 620 that may be coupled with the first side 614 of the substrate 610 and electrically coupled with one or more of the conductive traces 616. Each of the lighting elements may be separately and independently positioned on the first side 614 of the substrate 610 relative to each other lighting element. For example, the lighting elements may be arranged in one or more patterned arrangements, random arrangements, arranged in curved formations, arranged in scattered formations, or the like. The electrical components 620 can include plural lighting elements that can emit light to display an image from the first side 614 of the substrate 610. The lighting elements may emit light in a single color or plural different colors (e.g., RGB, RGBW, RGBWW, etc.). The lighting elements may be operably coupled with the first side 614 of the substrate and/or may be mounted to an edge of the substrate 610.

The electrical components 620 can also include or represent one or more control devices (e.g., one or more logic-based devices, such as microprocessors, processors, controllers, or the like). In one or more examples, each of the control devices may be operably coupled with a common controller that may communicate control signals to each of the control devices. Optionally, the controller and/or the control devices may represent processing circuitry such as one or more of a field programmable gate array (FPGA), application specific integrated circuit (ASIC), microprocessor(s), and/or the like. In one or more examples, the controller and/or the control devices may conductively receive electrical power from a power source onboard the aircraft 100. Additionally, the first and/or second displays 402, 404 may receive electrical power from the same source or an alternative source onboard the aircraft 100.

The control devices may be electrically coupled with one or more of the lighting elements via the conductive traces 616 and may control a setting of the lighting elements, such as to change a characteristic of the emitted light (e.g., a color, a shade, a brightness, etc.) to change a portion of the image displayed by the panel assembly 606. In one or more examples, the control devices may independently or separately control each of the lighting elements. For example, the control devices may change a setting of one or more of the lighting elements to change a characteristic of the light being emitted by each of the lighting elements (e.g., a color, a brightness, a shade, etc.). Optionally, the control devices may change a setting of one or more of the lighting elements to change which lighting elements are emitting light and which lighting elements are not emitting light. Changing one or more settings of the plural different lighting elements changes the image displayed by the panel assembly 606.

The plural electrical components 620 can include and/or represent one or more sensing devices. The sensing devices can include thermal sensors, motion sensors, proximity sensors, touch sensors, or the like. The sensing devices may detect movement, touch, thermal changes, or another interactive engagement with an operator. The sensing devices may sense or detect the interactions and may communicate the sensed data with the control devices. The control devices may control a setting of one or more of the lighting elements based on the sensed data. For example, the control devices may change a setting of one or more of the lighting elements of the panel assembly 606 to change one or more characteristics of the image (e.g., a color, a text, a shape or size of the image, etc.) that is displayed by the lighting elements 620 of the panel assembly 606 in response to the data sensed by the sensing devices.

In one or more examples, the lighting elements of the panel assembly 606 may display one image and the display 404 may display a different, second image. Optionally, the image displayed by the lighting elements of the panel assembly 606 may be related to, may have one or more common features (e.g., colors, textual information, shapes, sizes, etc.) as the image displayed by the display 404 (and/or the optional display overlays 414) such that the two images a visually connected, visually in concert with each other, appear related, or the like, to a person observing the layered assembly 600.

The panel assembly 606 also includes a decorative layer 630 that is operably coupled with the first side 614 of the substrate. The decorative layer 630 may be a decorative laminate, a film, an adhesive, a tape, or the like, that covers at least a portion of the substrate 610 and the conductive traces 616 and the electrical components 620 that are within the portion of the substrate that is covered by the decorative layer 630. The decorative layer 630 may have one or more characteristics (e.g., perforations, holes, openings, varying levels of transparency, etc.) that allow at least some of the light emitted by the lighting elements covered by the decorative layer 630 to pass through the decorative layer 630. As another example, the decorative layer 630 may be opaque, may be devoid passages, holes, perforations, etc., such that light emitted by the lighting elements positioned underneath the decorative layer 630 cannot pass through the decorative layer 630.

In one or more examples, the decorative layer 630 may include one or more attributes that correspond with one or more attributes of a portion of the interior cabin 300 of the aircraft 100. The decorative layer 630 may include textures, imagery, colors, etc., that may be based on a location of the aircraft where the panel assembly 606 may be positioned. For example, the attributes or characteristics of the decorative layer 630 may be visible and may allow the panel assembly 606 to visually appear to be a portion of the interior cabin when the lighting elements are not emitting lighting.

In one or more examples, the panel assembly 606 (e.g., including the substrate, electrical components, and the decorative layer 630) or a portion of the panel assembly may be encapsulated by an encapsulating material such as a resin material or an alternative liquid encapsulant. In one or more examples, the encapsulating material may enhance the image emitted by the lighting elements.

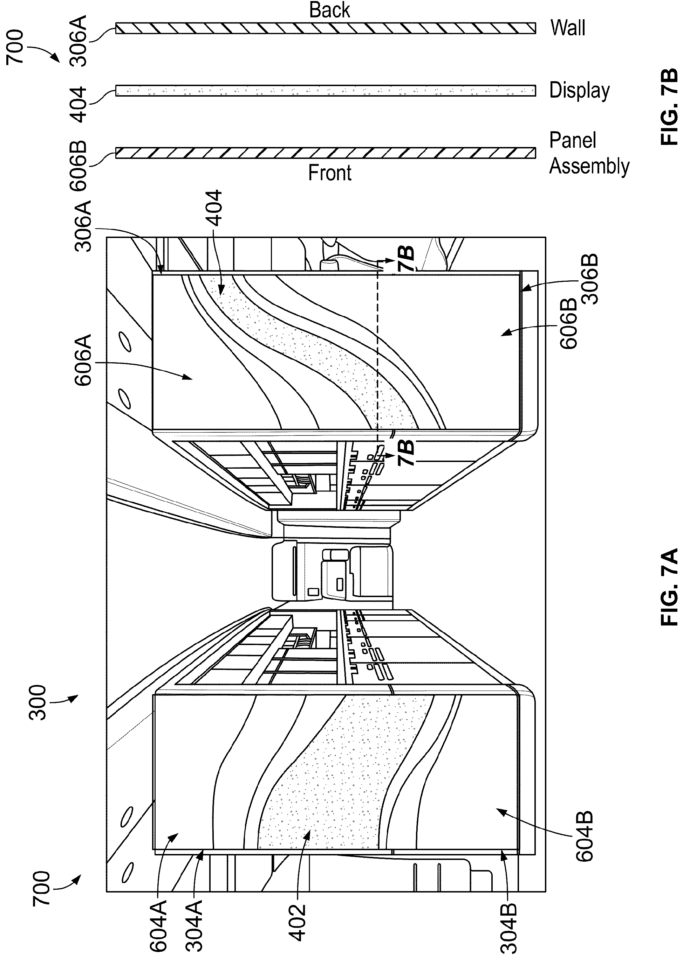

Figure 7A illustrates a layered display assembly 700 disposed within the internal cabin 300 and Figure 7B illustrates a cross-sectional exploded view of the layered display assembly 700, according to an example of the present disclosure. Like the layered display assembly 400 illustrated in Figures 4A and 4B, the layered display assembly 700 illustrated in Figure 7A includes the first display 402 operably coupled with portions of the side panels 304A, 304B and the second display 404 operably coupled with portions of the side panels 306A, 306B, respectively. The first and second displays 402, 404 may include or represent emissive screens (e.g., OLEDs, micro-LEDs, LEDs, or the like) and/or reflective screens (e.g., electronic paper, or the like). Different from the layered display assembly 500 illustrated in Figures 5A and 5B, however, the assembly 700 does not include a layer of decorative elements operably coupled with the viewing side of the displays 402, 404.

The layered display assembly 700 also includes a first panel assembly 604A and a second panel assembly 604B operably coupled with portions of the first display 402, and a third panel assembly 606A and a fourth panel assembly 606B operably coupled with portions of the second display 404. For example, the first and second panel assemblies 604A, 604B are operably coupled with the viewing sides of the displays and cover at least some of the first display 402, and the third and fourth panel assemblies 606A, 606B cover at least some of the second display 404.

Like the panel assembly 606 illustrated in Figure 6, each of the panel assemblies 604A, 604B, 606A, 606B includes a substrate with plural conductive traces printed on a first side of the substrate. Additionally, each of the panel assemblies also includes plural electrical components that may be coupled with the first side of the substrate and electrically coupled with one or more of the conductive traces. The electrical components can include plural lighting elements that can emit light to display an image from the first side of the substrate. The plural electrical components can include and/or represent one or more sensing devices. The sensing devices can include thermal sensors, motion sensors, proximity sensors, touch sensors, or the like.

Additionally, the electrical components can include or represent one or more control devices (e.g., one or more logic-based devices, such as microprocessors, processors, controllers, or the like). The control devices of the different panel assemblies may separately and independently control the lighting elements of the respective panel assembly, or alternatively one or more control devices may be operably coupled with the lighting elements of two or more different panel assemblies and may control operation of lighting elements of the two or more different panel assemblies. Optionally, the control devices may control operation of the lighting elements of one or more of the panel assemblies based on sensed data by the sensing devices.

The first display 402 and the second display 404 may display first images, and the first and second panel assemblies 604A, 604B and the third and fourth panel assemblies 606A, 606B may display second images via the lighting elements of the respective panel assemblies. The first images may include one or more textual information, decorative designs, colors, shapes, etc., that correspond the textual information, decorative designs, colors, shapes, etc. of the second images. For example, the first and second images displayed by the displays and panel assemblies may be controlled to present a cohesive display, to display a continuous or substantially continuous image or textual information across the plural displays, or the like.

In one or more examples, the first and/or second images displayed by the displays and panel assemblies, respectively, may include textual information such as advertising information, aircraft lighting scenes, flight routes, special events, details about a destination location of the aircraft (e.g., weather conditions, traffic information, etc.), details associated with the destination airport (e.g., gate information, airport maps, baggage claim information), details associated with connecting flights, etc. As another example, the first and/or second images may display decorative designs may include branding logos or other branding elements.

In the illustrated example, the panel assemblies 604A-B, 606A-B each have one or more curved edges along a surface of the respective first or second displays 402, 404. The curved edges may be shaped, sized, and positioned based on design preferences or aesthetic preferences of the owner of the aircraft. Optionally, the curved edges may be shaped, sized, positioned, etc., based on the type of information and/or the first images that will be displayed by the first and second displays 402, 404, and/or based on the information or images that will be displayed by the lighting elements of each of the panel assemblies. Optionally, the curved edges may be shaped, sized, positioned, etc., based on the characteristics of the decorative layers 630 of the panel assemblies, that may be visible when light is not emitted by the lighting elements of the panel assemblies.

Additionally, the panel assemblies include one or more curved features within the panel assemblies (e.g., away from the edge of the displays 402, 404). The curved features may be defined by the decorative layers of the panel assemblies. For example, panel assemblies may include two or more different decorative layers (e.g., arrangements next to each other, arranged on top of each other, etc.) that may be coupled with the respective substrate of the corresponding panel assemblies in a determined arrangement to visually present curved features or alternative displayed arrangements of the decorative layers. For example, the decorative layers may display one or more shapes, colors, formations, etc., that may be visible whether or not light is being emitted by the lighting elements.

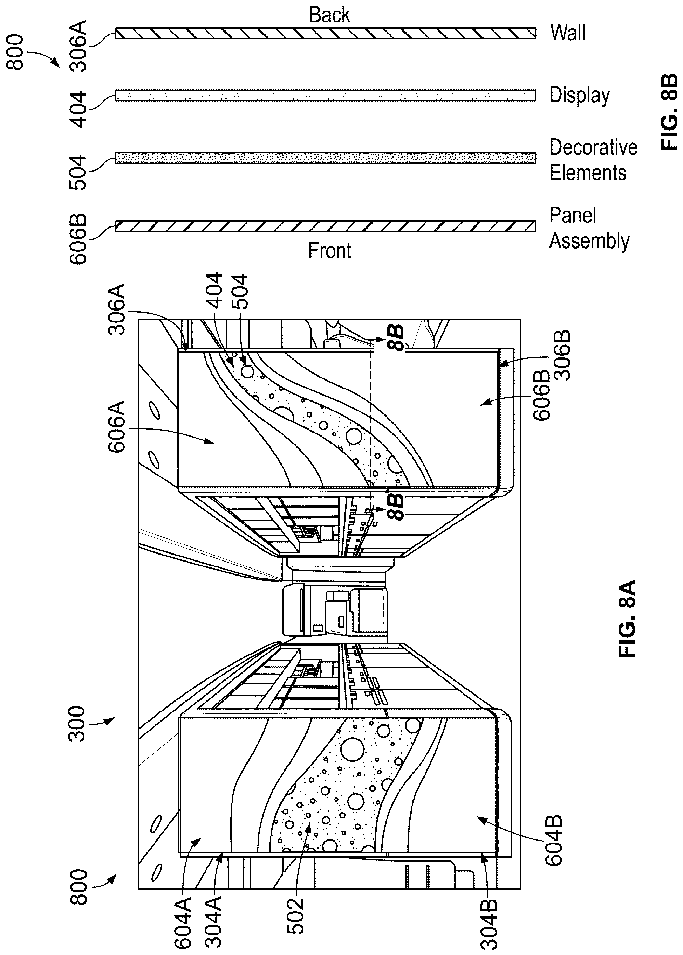

Figure 8A illustrates a layered display assembly 800 disposed within the internal cabin 300 and Figure 8B illustrates a cross-sectional exploded view of the layered display assembly 800, according to an example of the present disclosure. Like the layered display assembly 700 illustrated in Figures 7A and 7B, the layered display assembly 800 includes the first and second panel assemblies 604A, 604B operably coupled with the first display 402 and the third and fourth panel assemblies 606A, 606B operably coupled with the second display 404. The layered display assembly 800 also includes layers of plural decorative elements 502, 504 operably coupled with the viewing sides of the first and second displays 402, 404. In one example, the decorative elements may be decorative laminates, films, adhesives, tapes, or the like, that may be coupled with the viewing sides of the displays 402, 404.

The first and second displays 402, 404 may display first images and the decorative elements may be shaped, sized, and/or positioned by on the first images. The lighting elements of the panel assemblies 604A-B, 606A-B may display second images that may correspond with the first images. The decorative layers of the panel assemblies may include one or more characteristics (e.g., shapes, sizes, levels of transparency, etc.) that may be based on the first and/or second images, based on the area within the aircraft in which the layered assemblies are positioned, or the like. The second images displayed by the panel assemblies may dynamically change based on interactions sensed or detected by the sensing devices (e.g., change which lighting elements emit light, change a color or brightness of the light being emitted, or the like). Optionally, the displays and/or the panel assemblies may include one or more layered materials, lighting elements, sensing devices, control devices, etc., to display images and dynamically change one or more characteristics of the images being displayed.

The Figures illustrate plural different arrangements of the plural different layers that may be included within a multi-layered electrical display assembly. In alternative examples, the layered display assembly may include any combination of the different layers, the different layers may have alternative shapes and/or sizes relative the assemblies illustrated, the different layers may be positioned or coupled with each other in an alternative arrangement, or any combination therein. For example, the assemblies illustrated in the figures are for illustrative purposes only, and may have any alternative arrangements or configurations.

The subject matter described herein may incorporate one or more control or processing units. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the controller and/or the control devices may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Further, the disclosure comprises examples according to the following clauses:
Clause 1: a layered display assembly, comprising:
   a display including a mounting side and a viewing side, the mounting side configured to be operably coupled with a mounting surface, the viewing side configured to display a first image with one or more display elements; and
   a panel assembly comprising a substrate having a first side and a second side, the panel assembly include one or more conductive traces and plural electrical components configured to be disposed on the first side of the substrate, the plural electrical components are controlled to display a second image,
   wherein the second side of the substrate is configured to be operably coupled with the viewing side of the display to cover a portion of the viewing side of the display.
Clause 2: the layered display assembly of clause 1, wherein the one or more conductive traces are configured to be printed onto the first side of the substrate.
Clause 3: the layered display assembly of clauses 1 or 2, wherein the electrical components include plural lighting elements each electrically coupled with the one or more conductive traces, wherein the lighting elements are configured to emit light to display the second image on the first side of the substrate.
Clause 4: the layered display assembly of clause 3, wherein each of the plural lighting elements are configured to be individually and independently coupled with the first side of the first substrate.
Clause 5: the layered display assembly of clause 3 or clause 4, wherein the one or more conductive traces and the lighting elements are configured to be disposed on the first side of the substrate in an arrangement including one or more curvatures.
Clause 6: the layered display assembly of any of clauses 3-5, wherein the plural electrical components include one or more control devices electrically coupled with the lighting elements, wherein the one or more control devices are configured to control a setting of each of the lighting elements to change a characteristic of emitted light to change a portion of the second image.
Clause 7: the layered display assembly of clause 6, wherein the one or more control devices are configured to change the characteristic of the emitted light by changing one or more of a color of the light emitted by one or more of the lighting elements, changing a number of the lighting elements emitting light, or changing an arrangement of one or more of the lighting elements that emit light.
Clause 8: the layered display assembly of clause 6 or clause 7, wherein the plural electrical components include one or more sensing devices operably coupled with the one or more control devices, wherein the one or more sensing devices are configured to sense one or more interactions of a user, wherein the one or more control devices are configured to change a setting of one or more of the lighting elements to change a portion of the second image based on the one or more interactions sensed by the one or more sensors.
Clause 9: the layered display assembly of clause 8, wherein the one or more sensors include one or more proximity sensors, thermal sensors, or touch sensors.
Clause 10: the layered display assembly of any of clauses 1-9, the panel assembly further comprising a decorative layer configured to be operably coupled with the first side of the substrate, wherein the decorative layer is configured to cover at least a portion of the substrate and the one or more conductive traces and the electrical components within the portion of the substrate.
Clause 11: the layered display assembly of clause 10, the panel assembly further comprising an encapsulating material configured to be applied to at least a portion of the substrate and the decorative layer to encapsulate the portion of the substrate and the decorative layer.
Clause 12: the layered display assembly of clause 10 or clause 11, wherein the layered assembly is configured to be disposed within an interior cabin of an aircraft, wherein the decorative layer is configured to have one or more attributes corresponding to one or more attributes of a portion of the interior cabin of the aircraft.
Clause 13: the layered display assembly of clause 12, wherein the one or more attributes of the decorative layer are configured to be visible while the lighting elements are not emitting light.
Clause 14: the layered display assembly of any of clauses 1-13, further comprising one or more decorative elements configured to be operably coupled with the viewing side of the display, wherein the one or more decorative elements are configured to cover a portion of the display.
Clause 15: the layered display assembly of any of clauses 1-14, wherein the display includes one or more of a reflective screen or an emissive screen.
Clause 16: a layered electrical display assembly, comprising:
   a display including a mounting side configured to be operably coupled with a mounting surface, the display including a viewing side configured to display a first image with one or more display elements; and
   a panel assembly comprising:
      a substrate having a first side and a second side, wherein the second side of the substrate is configured to be operably coupled with a portion of the viewing side of the display;
      one more conductive traces configured to be disposed on the first side of the substrate;
      plural electrical components configured to be operably coupled with the first side of the substrate and electrically coupled with the one or more conductive traces; and
      a decorative layer configured to be operably coupled with at least a portion of the first side of the substrate, wherein the one or more conductive traces and the electrical components are configured to be disposed between the first side of the substrate and the decorative layer,
      wherein the electrical components include plural lighting elements configured to emit light to display a second image on the first side of the substrate.
Clause 17: the layered electrical display assembly of clause 16, further comprising one or more decorative elements configured to be operably coupled with the viewing side of the display, wherein the one or more decorative elements are configured to cover a portion of the display.
Clause 18: the layered electrical display assembly of clauses 16 or 17, wherein each of the plural lighting elements are configured to be individually and independently coupled with the first side of the first substrate, wherein the one or more conductive traces and the lighting elements are configured to be disposed on the first side of the substrate in an arrangement including one or more curvatures.
Clause 19: the layered electrical display assembly of any of clauses 16-18, wherein the layered electrical display assembly is configured to be disposed within an interior cabin of an aircraft, wherein the decorative layer is configured to have one or more attributes corresponding to one or more attributes of a portion of the interior cabin of the aircraft.
Clause 20: A multi-layered electrical display assembly, comprising:
   a display including a mounting side configured to be operably coupled with a mounting surface, the display including a viewing side configured to display a first image with one or more display elements; and
   a panel assembly comprising:
      a substrate having a first side and a second side, wherein the second side of the substrate is configured to be operably coupled with a portion of the viewing side of the display;
      one more conductive traces configured to be disposed on the first side of the substrate;
      plural lighting elements configured to be electrically coupled with the one or more conductive traces, the plural lighting elements configured to emit light to display a second image on the first side of the substrate,
      one or more control devices electrically coupled with the lighting elements, wherein the one or more control devices are configured to control a setting of each of the lighting elements to change a characteristic of emitted light to change a portion of the second image;
      one or more sensing devices operably coupled with the one or more control devices, wherein the one or more sensing devices are configured to sense one or more interactions of a user, wherein the one or more control devices are configured to change a setting of one or more of the lighting elements to change a portion of the second image based on the one or more interactions sensed by the one or more sensing devices; and
      a decorative layer configured to be operably coupled with at least a portion of the first side of the substrate, wherein the decorative layer is configured to cover at least a portion of the substrate and one or more of the lighting elements within the portion of the substrate covered by the decorative layer.

As described herein, examples of the present disclosure provide customizable multi-layered dynamic display assemblies that may be disposed within an aircraft, a stationary structure, or the like. Further, examples of the present disclosure provide efficient methods for displaying images and for changing the images being displayed that are more cost effective and easier to dynamically change than conventional branding colors and elements displayed within an aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A layered display assembly (600), comprising:
a display (402) including a mounting side (408) and a viewing side (406), the mounting side (408) configured to be operably coupled with a mounting surface, the viewing side (406) configured to display a first image with one or more display elements; and
a panel assembly (604) comprising a substrate (610) having a first side (614) and a second side (612), the panel assembly (604) include one or more conductive traces (616) and plural electrical components (620) configured to be disposed on the first side (614) of the substrate (610), the plural electrical components (620) configured to be controlled to display a second image,
wherein the second side (612) of the substrate (610) is configured to be operably coupled with the viewing side (406) of the display (402) to cover a portion of the viewing side (406) of the display (402).

2. The layered display assembly (600) of claim 1, wherein the one or more conductive traces (616) are configured to be printed onto the first side (614) of the substrate (610).

3. The layered display assembly (600) of claim 1 or claim 2, wherein the electrical components (620) include plural lighting elements each electrically coupled with the one or more conductive traces (616), wherein the lighting elements are configured to emit light to display the second image on the first side (614) of the substrate (610).

4. The layered display assembly (600) of claim 3, wherein each of the plural lighting elements are configured to be individually and independently coupled with the first side (614) of the first substrate (610).

5. The layered display assembly (600) of claim 3 or claim 4, wherein the one or more conductive traces (616) and the lighting elements are configured to be disposed on the first side (614) of the substrate (610) in an arrangement including one or more curvatures.

6. The layered display assembly (600) of any of claims 3 to 5, wherein the plural electrical components (620) include one or more control devices electrically coupled with the lighting elements, wherein the one or more control devices are configured to control a setting of each of the lighting elements to change a characteristic of emitted light to change a portion of the second image.

7. The layered display assembly (600) of claim 6, wherein the one or more control devices (620) are configured to change the characteristic of the emitted light by changing one or more of a color of the light emitted by one or more of the lighting elements, changing a number of the lighting elements emitting light, or changing an arrangement of one or more of the lighting elements that emit light.

8. The layered display assembly (600) of claim 6 or claim 7, wherein the plural electrical components (620) include one or more sensing devices operably coupled with the one or more control devices, wherein the one or more sensing devices are configured to sense one or more interactions of a user, wherein the one or more control devices are configured to change a setting of one or more of the lighting elements to change a portion of the second image based on the one or more interactions sensed by the one or more sensors, optionally, wherein the one or more sensors include one or more proximity sensors, thermal sensors, or touch sensors.

9. The layered display assembly (600) of any of claims 1 to 8, the panel assembly (604) further comprising a decorative layer (630) configured to be operably coupled with the first side (614) of the substrate (610), wherein the decorative layer (630) is configured to cover at least a portion of the substrate (610) and the one or more conductive traces (616) and the electrical components (620) within the portion of the substrate (610).

10. The layered display assembly (600) of claim 10, the panel assembly (604) further comprising an encapsulating material configured to be applied to at least a portion of the substrate (610) and the decorative layer (630) to encapsulate the portion of the substrate (610) and the decorative layer (630), and/or, wherein the layered assembly is configured to be disposed within an interior cabin (200) of an aircraft (100), wherein the decorative layer (630) is configured to have one or more attributes corresponding to one or more attributes of a portion of the interior cabin (200) of the aircraft (100), optionally, wherein the one or more attributes of the decorative layer (630) are configured to be visible while the lighting elements are not emitting light.

11. The layered display assembly (600) of any of claims 1 to 10, further comprising one or more decorative elements (502) configured to be operably coupled with the viewing side (406) of the display (402), wherein the one or more decorative elements (502) are configured to cover a portion of the display (402), and/or, wherein the display (402) includes one or more of a reflective screen or an emissive screen.

12. A layered electrical display assembly (600), comprising:
a display (402) including a mounting side (408) configured to be operably coupled with a mounting surface, the display (402) including a viewing side (406) configured to display a first image with one or more display elements; and
a panel assembly (604) comprising:
a substrate (610) having a first side (614) and a second side (612), wherein the second side (612) of the substrate (610) is configured to be operably coupled with a portion of the viewing side (406) of the display (402);
one more conductive traces (616) configured to be disposed on the first side (614) of the substrate (610);
plural electrical components (620) configured to be operably coupled with the first side (614) of the substrate (610) and electrically coupled with the one or more conductive traces (616); and
a decorative layer (630) configured to be operably coupled with at least a portion of the first side (614) of the substrate (610), wherein the one or more conductive traces (616) and the electrical components (620) are configured to be disposed between the first side (614) of the substrate (610) and the decorative layer (630),
wherein the electrical components (620) include plural lighting elements configured to emit light to display a second image on the first side (614) of the substrate (610).

13. The layered electrical display assembly (600) of claim 12, further comprising one or more decorative elements (502) configured to be operably coupled with the viewing side (406) of the display (402), wherein the one or more decorative elements (502) are configured to cover a portion of the display (402).

14. The layered electrical display assembly (600) of claim 12 or claim 13, wherein each of the plural lighting elements (620) are configured to be individually and independently coupled with the first side (614) of the first substrate (610), wherein the one or more conductive traces (616) and the lighting elements (620) are configured to be disposed on the first side (614) of the substrate (610) in an arrangement including one or more curvatures, and/or, wherein the layered electrical display assembly (600) is configured to be disposed within an interior cabin (200) of an aircraft (100), wherein the decorative layer (630) is configured to have one or more attributes corresponding to one or more attributes of a portion of the interior cabin (200) of the aircraft (100).

15. A multi-layered electrical display assembly (600), comprising:
a display (402) including a mounting side (408) configured to be operably coupled with a mounting surface, the display (402) including a viewing side (406) configured to display a first image with one or more display elements; and
a panel assembly (604) comprising:
a substrate (610) having a first side (614) and a second side (612), wherein the second side (612) of the substrate (610) is configured to be operably coupled with a portion of the viewing side (406) of the display (402);
one more conductive traces (616) configured to be disposed on the first side (614) of the substrate (610);
plural lighting elements (620) configured to be electrically coupled with the one or more conductive traces (616), the plural lighting elements (620) configured to emit light to display a second image on the first side (614) of the substrate (610),
one or more control devices electrically coupled with the lighting elements (620), wherein the one or more control devices are configured to control a setting of each of the lighting elements (620) to change a characteristic of emitted light to change a portion of the second image;
one or more sensing devices operably coupled with the one or more control devices, wherein the one or more sensing devices are configured to sense one or more interactions of a user, wherein the one or more control devices are configured to change a setting of one or more of the lighting elements (620) to change a portion of the second image based on the one or more interactions sensed by the one or more sensing devices; and
a decorative layer (630) configured to be operably coupled with at least a portion of the first side (614) of the substrate (610), wherein the decorative layer (614) is configured to cover at least a portion of the substrate (610) and one or more of the lighting elements (620) within the portion of the substrate (610) covered by the decorative layer (630).
